# DEMANDE DE BREVET EUROPEEN

(11) **EP 1 217 241 A1**
(43) Date de publication de la demande: **26.06.2002**
(21) Numéro de dépôt: 01403257.7
(22) Date de dépôt: 14.12.2001
(51) Int. Cl.: F16D 23/04

(54) **Dispositif de synchronisation pour boite de vitesses mécanique**

(30) Priorité: 22.12.2000 FR 0016893
(71) Demandeur: Peugeot Citroen Automobiles, 92200 Neuilly Sur Seine (FR)
(72) Inventeur: Delporte, Stéphane, 91190 Saint Aubin (FR)
(74) Mandataire: De Cuenca, Emmanuel Jaime

(57) **Abrégé**

L'invention concerne un dispositif de synchronisation pour boite de vitesses mécanique (1) comportant au moins un pignon de transmission (2,3) adapté pour être monté fou sur un arbre d'entrainement et muni sur une de ses faces (21,31) de crabots (22,32) répartis uniformément autour de son axe de symétrie, un manchon baladeur (4) comportant des cannelures internes (41) adaptées pour lier à rotation ledit manchon avec l'arbre d'entrainement et muni sur au moins une de ses faces de crabots (42) répartis uniformément autour de son axe de symétrie et adaptés pour être entrainés en rotation par les crabots du pignon de transmission.

Selon l'invention, le pignon de transmission (2,3) comporte au moins une paroi latérale (25,35) disposée autour de ses crabots et présentant une gorge (26,36) dans laquelle est disposée une bague (27,37) en matériau déformable adaptée pour freiner une paroi latérale (43,44) solidaire du manchon et disposée autour des crabots de ce dernier.

## Description

L'invention se rapporte à un dispositif de synchronisation pour boite de vitesses mécanique comportant au moins un pignon de transmission adapté pour être monté fou sur un arbre d'entrainement et muni sur une de ses faces de crabots répartis uniformément autour de son axe de symétrie, un manchon baladeur comportant des cannelures internes adaptées pour lier à rotation ledit manchon avec l'arbre d'entrainement et muni sur au moins une de ses faces de crabots répartis uniformément autour de son axe de symétrie et adaptés pour être entrainés en rotation par les crabots du pignon de transmission.

Ce type de dispositifs est largement répandu dans les boites de vitesse implantées dans les véhicules automobiles à caractère sportif, car ils amènent une grande rapidité de passage de rapports et sont extrêmement fiables dans des conditions d'utilisation exigeantes. Cependant, ils ont pour inconvénients majeurs de procurer un mauvais agrément de passage pour le conducteur et de répercuter un bruit important à l'extérieur du carter de boîte. Ces inconvénients les rendent incompatibles pour une utilisation dans des boites de vitesse destinées aux véhicules automobiles de série.

Le but de la présente invention est alors de proposer un dispositif du type de celui mentionné ci-dessus qui puisse être utilisé dans une boîte de vitesses destinée aux véhicules automobiles de série.

Pour ce faire, le dispositif selon le préambule ci-dessus se caractérise par le fait que le pignon de transmission comporte au moins une paroi latérale disposée autour de ses crabots et présentant une gorge dans laquelle est disposée une bague en matériau déformable adaptée pour freiner une paroi latérale solidaire du manchon et disposée autour des crabots de ce dernier. Un tel dispositif permet de minimiser, sans l'annuler, la vitesse différentielle entre le manchon baladeur et le pignon de transmission, lors de la phase de crabotage. Ainsi, l'agrément de passage de rapports est garanti et le bruit résultant du chocs entre les crabots est largement atténué.

Avantageusement, la bague en matériau déformable comporte des tocs qui viennent s'insérer dans la gorge du pignon de transmission. Ces tocs permettent une meilleure tenue de la bague.

Avantageusement, le dispositif selon l'invention peut comporter une ou plusieurs caractéristiques suivantes :
- un clip est monté dans la gorge du pignon et adapté pour bloquer la bague dans la gorge;
- la paroi latérale et le manchon baladeur sont une pièce monobloc;
- le manchon baladeur est muni sur ses deux faces de crabots répartis uniformément autour de son axe de symétrie et de deux parois latérales.

Le dispositif qui vient d'être décrit est avantageusement monté sur un arbre d'une boite de vitesses de véhicule automobile.

D'autres particularités et avantages apparaîtront à la lecture de la description ci-après faite en référence aux figures 1 à 3 dans lesquelles :
- la figure 1 est une vue éclatée en perspective d'un dispositif de synchronisation selon l'art antérieur,
- la figure 2 est une vue éclatée en perspective d'un dispositif de synchronisation représenté partiellement en coupe,
- la figure 3 une vue en perspective du dispositif selon la figure 2 représenté partiellement en coupe tel qu'il est monté sur un arbre de boite de vitesses.

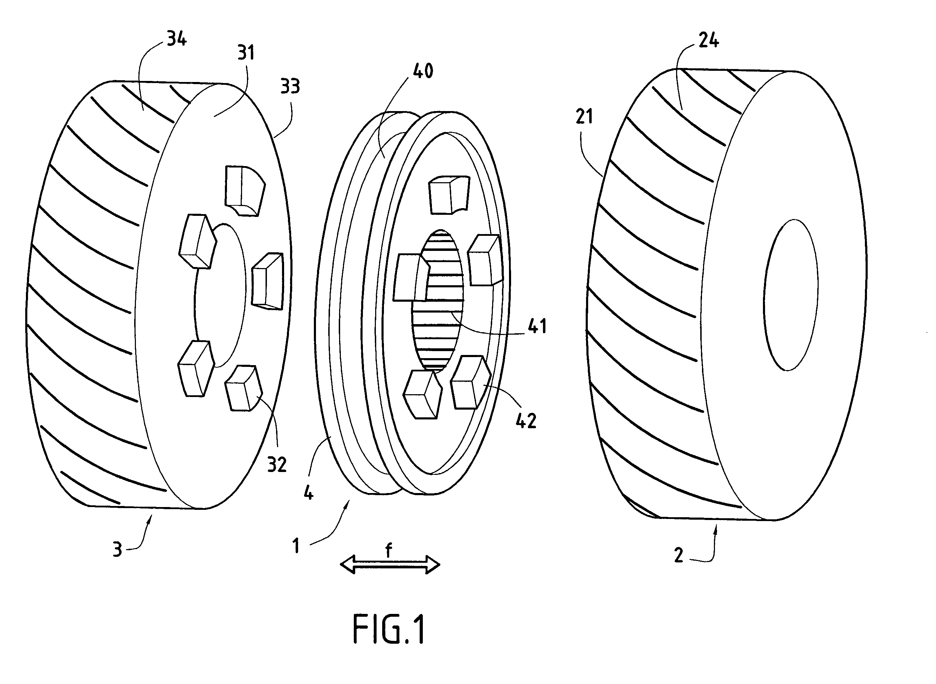

Le dispositif de synchronisation 1 selon l'art antérieur représenté à la figure 1 est monté sur un premier arbre d'entrainement (non représenté) d'une boite de vitesse mécanique implanté dans un véhicule automobile à caractère sportif. Ce dispositif 1 comporte deux pignons de transmission 2,3 montés fous sur l'arbre d'entrainement et disposés de part et d'autre d'un manchon baladeur 4. Chacun des pignons de transmission 2,3 est muni sur sa face latérale 21,31 en regard avec le manchon 4 d'un série de cinq crabots 22,32 répartis uniformément autour de leur axe de symétrie. Chacun de ces pignons 2, 3 présente, de manière connue en soi, sur sa paroi de révolution 23,33 une denture hélicoïdale 24,34 adaptée pour engrener avec un autre pignon de transmission relatif au même rapport monté sur un autre arbre d'entraînement monté parrallèlement au premier.

Le manchon baladeur 4 comporte à sa périphérie une gorge 40 dans laquelle la crosse d'une fourchette est susceptible de venir se loger, de manière connue en soi, et dont le déplacement permet le rapprochement du manchon 4 vers l'un ou l'autre des pignons de transmission 2,3. Il comporte également sur chacune de ses faces latérales 41 une série de cinq crabots 42 de forme identique à ceux 22,32 des pignons de transmission 2,3 et des cannelures internes 43 adaptées pour lier à rotation le manchon avec l'arbre d'entraînement.

Le fonctionnement de ce dispositif selon l'état de l'art est le suivant. Lorsque le conducteur désire passer un rapport de vitesses donné correspondant à l'un des pignons de transmission 2,3, il déplace la fourchette en translation selon la flèche f par l'intermédiaire d'une commande non représentée. La crosse de celle-ci engagée dans la gorge 41 du baladeur 4 rapproche celui-ci vers le pignon correspondant 2,3 jusqu'à ce que les crabots 32, 42 rentrent mutuellement en contact. Le choc entre eux peut parfois être relativement important du fait de la différence de vitesse différentielle importante qui existe entre le pignon 2,3 et le baladeur 4. Ce choc répercute un bruit important à l'extérieur du carter de boite de vitesses et est néfaste pour le conducteur en termes d'agrément. Ces inconvénients ne permettent pas d'implanter ce type de dispositif dans une boîte de vitesses destinée à être utilisée dans un véhicule automobile de série.

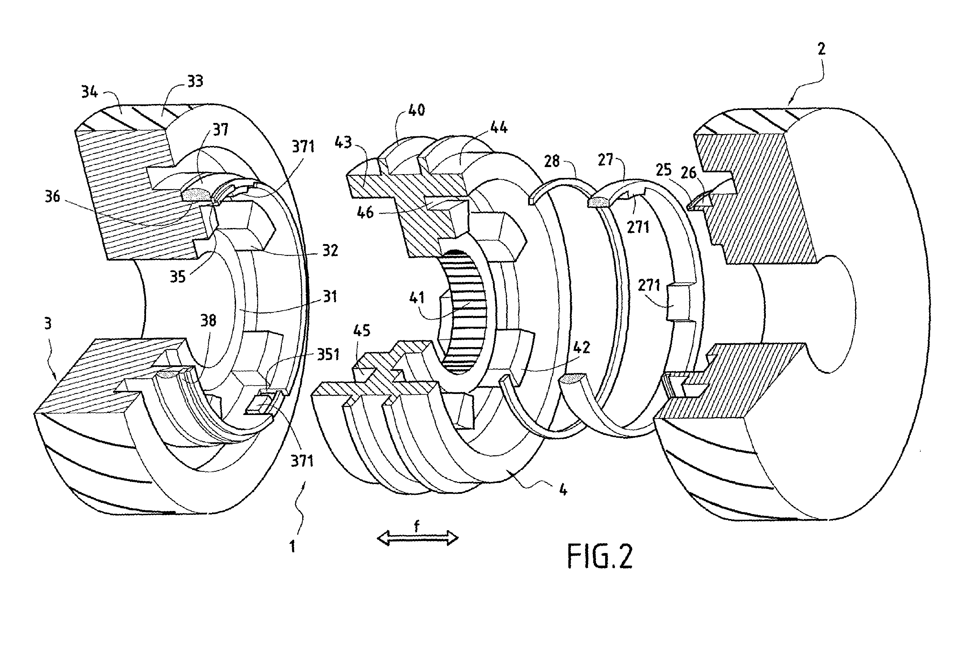

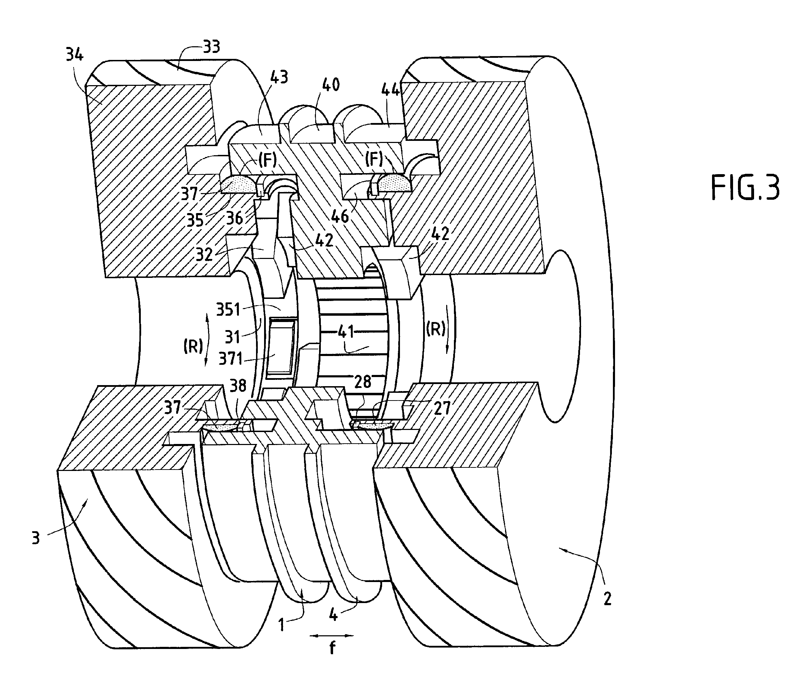

Pour pallier à ces inconvénients, le dispositif 1 selon l'invention représenté aux figures 2 et 3 prévoit tout d'abord que chaque pignon de transmission 2,3 présente une paroi latérale 25,35 venue de matière avec celui-ci. Cette paroi 25,35 est disposée autour des crabots 22,32 et s'étend vers l'extérieur en regard du baladeur 4. Chacune de ses parois latérales 25,35 comporte à sa périphérie une gorge 26,36 dans laquelle est logée une bague 27,37 en matériau déformable qui est retenue par l'intermédiaire d'un clip d'arrêt 28,38.

Chaque bague 27,37 comporte des tocs 271,371 angulairement répartis qui viennent s'insérer dans des encoches 251,351 pratiquées dans la paroi latérale 25,35 entre deux crabots consécutifs 22,32.

Le baladeur 4 quant à lui présente deux parois latérales 43,44 disposées de part et d'autre de la gorge 40 et qui délimitent respectivement des gorges 45,46 de forme conjuguée avec celle des parois latérales 25,35.

Le dispositif selon l'invention fonctionne de la manière suivante. Lors du déplacement du baladeur 4 vers l'un des deux pignons 2,3 de transmission correspondant au rapport désiré (selon la flèche f) la paroi latérale 25,35 en regard de ce pignon vient frotter progressivement contre la bague 27,37 jusqu'à ce que cette zone (F) soit égale à la largeur de la bague. Au cours de ce déplacement la bague est comprimée et tourne concomitamment avec le baladeur 4 selon le sens de rotation de l'arbre sur lequel il est monté jusqu'à ce que les tocs 371 viennent en butée contre le rebord des encoches 351 correspondantes. La vitesse différentielle du manchon baladeur 4 est ainsi réduite et le choc lors du contact entre les crabots 42 et ceux 32 du pignon 3 est amoindri. Le bruit engendré à l'extérieur du carter de boite de vitesses est ainsi bien moindre que celui engendré par le dispositif selon l'état de l'art (figure 1).

Bien entendu, il va de soi que de nombreuses modifications peuvent être apportées sans pour autant sortir du cadre de l'invention. Par exemple, il peut être envisagé de remplacer la bague en matériau déformable par tout autre moyen susceptible de réduire la vitesse différentielle du manchon baladeur avant son engagement avec l'un ou l'autre des pignons de transmission.

## Revendications

1. Dispositif de synchronisation pour boite de vitesses mécanique (1) comportant au moins un pignon de transmission (2,3) adapté pour être monté fou sur un arbre d'entrainement et muni sur une de ses faces (21,31) de crabots (22,32) répartis uniformément autour de son axe de symétrie, un manchon baladeur (4) comportant des cannelures internes (41) adaptées pour lier à rotation ledit manchon avec l'arbre d'entrainement et muni sur au moins une de ses faces de crabots (42) répartis uniformément autour de son axe de symétrie et adaptés pour être entrainés en rotation par les crabots du pignon de transmission, **caractérisé en ce que** le pignon de transmission (2,3) comporte au moins une paroi latérale (25,35) disposée autour de ses crabots et présentant une gorge (26,36) dans laquelle est disposée une bague (27,37) en matériau déformable adaptée pour freiner une paroi latérale (43,44) solidaire du manchon et disposée autour des crabots de ce dernier.

2. Dispositif selon la revendication 1, **caractérisé en ce que** la bague en matériau déformable comporte des tocs (371) qui viennent s'insérer dans la gorge du pignon de transmission.

3. Dispositif selon la revendication 1 ou 2, **caractérisé en ce qu'**un clip (38) est monté dans la gorge du pignon et adapté pour bloquer la bague dans la gorge.

4. Dispositif selon l'une des revendications précédentes, **caractérisé en ce que** la paroi latérale et le manchon baladeur sont une pièce monobloc.

5. Dispositif selon l'une des revendications précédentes, **caractérisé en ce que** le manchon baladeur est muni sur ses deux faces de crabots répartis uniformément autour de son axe de symétrie et de deux parois latérales.

6. Utilisation du dispositif selon l'une des revendications précédentes monté sur un arbre d'une boite de vitesses de véhicule automobile.
